# EUROPEAN PATENT APPLICATION

(11) **EP 4 439 911 A1**
(43) Date of publication of application: **02.10.2024**
(21) Application number: 21965125.4
(22) Date of filing: 25.11.2021
(51) Int. Cl.: H02J 7/00

(54) **ELECTROCHEMICAL DEVICE AND CONTROL METHOD THEREFOR, ELECTRONIC DEVICE, AND STORAGE MEDIUM**

(71) Applicant: Ningde Amperex Technology Limited, Ningde, Fujian 352100 (CN)
(72) Inventor: ZOU, Bangkun, Ningde, Fujian 352100 (CN); QU, Changming, Ningde, Fujian 352100 (CN); YANG, Fan, Ningde, Fujian 352100 (CN)
(74) Representative: Icosa
(86) International application number: PCT/CN2021/133152
(87) International publication number: WO 2023/092390

(57) **Abstract**

An electronic apparatus, and a storage medium. The electrochemical apparatus control method includes steps (a) and (b): (a) when an internal resistance change rate of the electrochemical apparatus is smaller than a first threshold, performing charging/discharging at a first voltage and a second voltage; and (b) when the internal resistance change rate of the electrochemical apparatus is greater than or equal to the first threshold, raising a discharge cut-off voltage of the electrochemical apparatus by a first raising amount. The internal resistance change rate of the electrochemical apparatus is monitored and the electrochemical apparatus is controlled based on the internal resistance change rate. This improves the cycling performance of the electrochemical apparatus while guaranteeing high energy density of the electrochemical apparatus.

## Description

### TECHNICAL FIELD

This application relates to the field of electrochemical energy storage, and in particular to, an electrochemical apparatus and a control method therefor, an electronic apparatus, and a storage medium.

### BACKGROUND

With the development and advancement of electrochemical apparatuses (for example, lithium-ion batteries), higher requirements are placed on cycling performance and energy density of the electrochemical apparatuses. At present, using a silicon-based material in the negative electrode is a trend for increasing the energy density of electrochemical apparatuses. In addition to material improvements, other improvements are also anticipated for improving the cycling performance and energy density of electrochemical apparatuses.

### SUMMARY

Some embodiments of this application provide a method for controlling an electrochemical apparatus, where an initial discharge cut-off voltage of an electrochemical apparatus is a first voltage and an initial charge cut-off voltage is a second voltage, and the control method includes steps (a) and (b): (a) when an internal resistance change rate of an electrochemical apparatus is smaller than a first threshold, performing charging/discharging at the first voltage and the second voltage; and (b) when the internal resistance change rate of the electrochemical apparatus is greater than or equal to the first threshold, raising a discharge cut-off voltage of the electrochemical apparatus by a first raising amount.

In some embodiments, the when the internal resistance change rate of the electrochemical apparatus is greater than or equal to the first threshold, raising a discharge cut-off voltage of the electrochemical apparatus by a first raising amount includes: (c) when the internal resistance change rate of the electrochemical apparatus is greater than or equal to the first threshold and smaller than or equal to the second threshold, raising the discharge cut-off voltage of the electrochemical apparatus by the first raising amount, where the second threshold is greater than the first threshold; and (d) when the internal resistance change rate of the electrochemical apparatus is greater than the second threshold, performing an operation related to a charge/discharge state of the electrochemical apparatus. With the control method of this application adopted, during use of the electrochemical apparatus, the high energy density feature of the electrochemical apparatus can be fully utilized in an early stage when the internal resistance change rate is small. In addition, during cycling, the internal resistance change rate state of the electrochemical apparatus can be automatically monitored, to intelligently determine whether to raise the discharge cut-off voltage of the electrochemical apparatus by the first raising amount or perform an operation related to the charge/discharge state of the electrochemical apparatus, thereby increasing the cycle life of the electrochemical apparatus while guaranteeing high energy density of the electrochemical apparatus.

In some embodiments, the electrochemical apparatus includes a negative electrode plate, the negative electrode plate includes a negative electrode active material layer, and the negative electrode active material layer includes a silicon-based material. Using the silicon-based material can increase the energy density of the electrochemical apparatus. In some embodiments, the silicon-based material includes at least one of silicon, a silicon-oxygen material, a silicon-carbon material, or a silicon-oxygen-carbon material. In some embodiments, based on a mass of the negative electrode active material layer , a mass percentage of Si element in the negative electrode active material layer ranges from 1% to 90%. If the mass percentage of Si element in the negative electrode active material layer is excessively small, the effect of increasing the energy density of the electrochemical apparatus is relatively limited. If the mass percentage of Si element in the negative electrode active material layer is excessively large, the silicon-based material swells excessively during cycling, affecting the cycling performance of the electrochemical apparatus.

In some embodiments, a value range of the first voltage is 2.5 V to 3.5 V, and a value range of the second voltage is 4.2 V to 4.6 V. An excessively high first voltage hinders fully utilizing the energy density of the electrochemical apparatus, while an excessively low first voltage is likely to cause irreversible damage to the electrochemical apparatus. An excessively high second voltage is likely to cause irreversible damage to the electrochemical apparatus, while an excessively low second voltage hinders fully utilizing the energy density of the electrochemical apparatus. In some embodiments, the first threshold satisfies 1% ≤ first threshold ≤ 10%. If the first threshold is excessively small, the discharge cut-off voltage will be raised even when the electrochemical apparatus is in a good cycling state. This hinders fully utilizing the energy density of the electrochemical apparatus. If the first threshold is excessively large, the effect of increasing the cycle life of the electrochemical apparatus is relatively limited. In some embodiments, the second threshold satisfies 10% < second threshold ≤ 20%. If the second threshold is excessively small, the operation related to the charge/discharge state of the electrochemical apparatus will be performed even when the electrochemical apparatus is in a good cycling state. If the second threshold is excessively large, the effect of increasing the cycle life and safety performance of the electrochemical apparatus is relatively limited. In some embodiments, a value range of the first raising amount is 0.03 V to 0.6 V. If the first raising amount is excessively small, the operation of raising the discharge cut-off voltage may need to be performed frequently, or the effect of increasing the cycle life of the electrochemical apparatus is relatively limited. If the first raising amount is excessively large, the discharge cut-off voltage of the electrochemical apparatus is excessively high. This hinders fully utilizing the energy density of the electrochemical apparatus. In some embodiments, the performing an operation related to a charge/discharge state of the electrochemical apparatus includes at least one of steps (e) and (f): (e) stopping a charge/discharge operation of the electrochemical apparatus; and (f) sending prompt information for stopping the charge/discharge operation of the electrochemical apparatus. When the internal resistance change rate of the electrochemical apparatus is greater than the second threshold, cycling of the electrochemical apparatus may be unexpected. In this case, safety risks such as battery swelling can be avoided by stopping the charge/discharge operation of the electrochemical apparatus and/or sending prompt information for stopping the charge/discharge operation of the electrochemical apparatus, for example, reminding the user to replace the battery.

Another embodiment of this application provides a computer-readable storage medium. The computer-readable storage medium stores a computer program, and when the computer program is configured to be executed by a processor to implement.

Another embodiment of this application provides a charging apparatus, including a processor and a computer-readable storage medium. The computer-readable storage medium stores computer-executable instructions configured to be being executed by the processor, and when the computer-executable instructions are executed by the processor, the foregoing electrochemical apparatus control method is implemented.

Another embodiment of this application provides an electrochemical apparatus, including a processor and a computer-readable storage medium. An initial discharge cut-off voltage of the electrochemical apparatus is a first voltage and an initial charge cut-off voltage is a second voltage. The computer-readable storage medium stores computer-executable instructions configured to be being executed by the processor, and when the computer-executable instructions are executed by the processor, the control method is implemented. The control method includes steps (a) and (b): (a) when an internal resistance change rate of an electrochemical apparatus is smaller than a first threshold, performing charging/discharging at the first voltage and the second voltage; (b) when the internal resistance change rate of the electrochemical apparatus is greater than or equal to the first threshold, raising a discharge cut-off voltage of the electrochemical apparatus by a first raising amount.

In some embodiments, the when the internal resistance change rate of the electrochemical apparatus is greater than or equal to the first threshold, raising a discharge cut-off voltage of the electrochemical apparatus by a first raising amount includes: (c) when the internal resistance change rate of the electrochemical apparatus is greater than or equal to the first threshold and smaller than or equal to the second threshold, raising the discharge cut-off voltage of the electrochemical apparatus by the first raising amount, where the second threshold is greater than the first threshold; and (d) when the internal resistance change rate of the electrochemical apparatus is greater than the second threshold, performing an operation related to a charge/discharge state of the electrochemical apparatus.

In some embodiments, the electrochemical apparatus includes a negative electrode plate, the negative electrode plate includes a negative electrode active material layer, and the negative electrode active material layer includes a silicon-based material. In some embodiments, the silicon-based material includes at least one of silicon, a silicon-oxygen material, a silicon-carbon material, or a silicon-oxygen-carbon material. In some embodiments, based on a mass of the negative electrode active material layer, a mass percentage of Si element in the negative electrode active material layer ranges from1% to 90%.

In some embodiments, a value range of the first voltage is 2.5 V to 3.5 V, and a value range of the second voltage is 4.2 V to 4.6 V. In some embodiments, the first threshold satisfies 1% ≤ first threshold ≤ 10%, and the second threshold satisfies 10% < second threshold ≤ 20%. In some embodiments, a value range of the first raising amount is 0.03 V to 0.6 V. In some embodiments, the performing an operation related to a charge/discharge state of the electrochemical apparatus includes at least one of steps (e) and (f): (e) stopping a charge/discharge operation of the electrochemical apparatus; and (f) sending prompt information for stopping the charge/discharge operation of the electrochemical apparatus.

An embodiment of this application further provides an electronic apparatus including the foregoing electrochemical apparatus.

In this embodiment of this application, the internal resistance change rate of the electrochemical apparatus is monitored and the electrochemical apparatus is controlled based on the internal resistance change rate. This improves the cycling performance of the electrochemical apparatus while guaranteeing high energy density of the electrochemical apparatus.

### BRIEF DESCRIPTION OF DRAWINGS

FIG. 1 is a schematic diagram of an electrochemical apparatus control method according to some embodiments of this application.
FIG. 2 is a schematic structural diagram of a charging apparatus according to some embodiments of this application.
FIG. 3 is a schematic structural diagram of a system according to some embodiments of this application.

### DESCRIPTION OF EMBODIMENTS

The following embodiments may enable those skilled in the art to understand this application more comprehensively, but do not limit this application in any way.

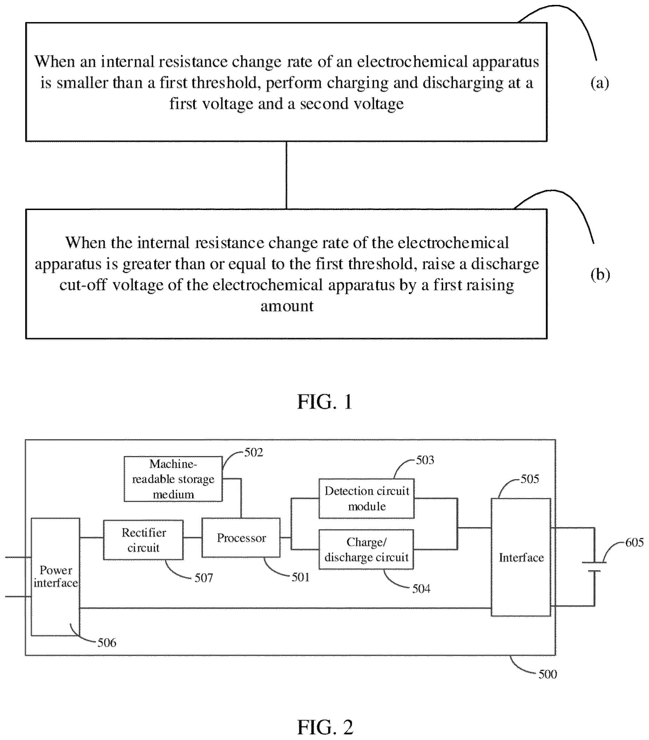

As shown in FIG. 1, some embodiments of this application provide an electrochemical apparatus control method. In some embodiments, an initial discharge cut-off voltage of the electrochemical apparatus is a first voltage and an initial charge cut-off voltage is a second voltage. The initial discharge cut-off voltage of the electrochemical apparatus is a voltage at which the electrochemical apparatus cannot be discharged (that is, discharged to a state of charge (SOC) of 0%), and the initial charge cut-off voltage of the electrochemical apparatus is a voltage at which the electrochemical apparatus is charged to a SOC of 100%. In some embodiments, the electrochemical apparatus includes but is not limited to a lithium-ion battery. In some embodiments, the control method of this application includes step (a) and step (b).

In step (a), when an internal resistance change rate of the electrochemical apparatus is smaller than a first threshold, charging/discharging is performed at the first voltage and the second voltage. In other words, charging/discharging is performed at the initial charge cut-off voltage and initial discharge cut-off voltage. In this application, the internal resistance change rate of the electrochemical apparatus is a change rate of current internal resistance relative to the internal resistance of electrochemical apparatus before 100 cycles, where one cycle means being charged and discharged once. For example, as measured by an internal resistance tester, the internal resistance of a fresh electrochemical apparatus is n, and the internal resistance of the electrochemical apparatus measured every 100 cycles is m. Then, the internal resistance change rate is (m-n)/n. For example, an electrochemical apparatus is removed from an electronic apparatus using electrochemical apparatus. The internal resistance of the electrochemical apparatus is tested with an internal resistance tester. Cyclic discharging and charging is performed on the electrochemical apparatus. Then, the internal resistance of the electrochemical apparatus is tested with an internal resistance tester every 100 cycles (a complete cycle of discharging and charging is regarded as one cycle). It should be understood that this is only exemplary and other appropriate methods may be used to test the internal resistance change rate. With constant cycling of the electrochemical apparatus, its internal resistance tends to increase. When the internal resistance change rate of the electrochemical apparatus in every 100 cycles is smaller than the first threshold, it indicates that cycling of the electrochemical apparatus is in a controllable range and charge/discharge cycling can be performed in accordance with initial settings.

In step (b), when the internal resistance change rate of the electrochemical apparatus is greater than or equal to the first threshold, the discharge cut-off voltage of the electrochemical apparatus is raised by a first raising amount. With the cycling of the electrochemical apparatus, the internal resistance change rate of the electrochemical apparatus rises to the first threshold. At this time, the discharge cut-off voltage of the electrochemical apparatus is raised by the first raising amount. That is, the full charge and shallow discharge mode is used. Raising the discharge cut-off voltage can reduce the depth of charging/discharging of the negative electrode plate, leaving the negative electrode active material in the full charge and shallow discharge mode. As a result, the cycle life of the electrochemical apparatus can be increased.

In some embodiments, when the internal resistance change rate of the electrochemical apparatus is greater than or equal to the first threshold, raising a discharge cut-off voltage of the electrochemical apparatus by a first raising amount includes steps (c) and (d). In step (c), when the internal resistance change rate of the electrochemical apparatus is greater than or equal to the first threshold and smaller than or equal to a second threshold, the discharge cut-off voltage of the electrochemical apparatus is raised by the first raising amount, where the second threshold is greater than the first threshold. With the cycling of the electrochemical apparatus, the internal resistance change rate of the electrochemical apparatus rises above the first threshold but below the second threshold. At this time, the discharge cut-off voltage of the electrochemical apparatus is raised by the first raising amount. That is, the full charge and shallow discharge mode is used. Raising the discharge cut-off voltage can reduce the depth of charging/discharging of the negative electrode plate, leaving the negative electrode active material in the full charge and shallow discharge mode. As a result, the cycle life of the electrochemical apparatus can be increased.

In step (d), when the internal resistance change rate of the electrochemical apparatus is greater than the second threshold, an operation related to the charge/discharge state of the electrochemical apparatus is performed. In some embodiments, the operation related to the charge/discharge state of the electrochemical apparatus includes any operation affecting the charging/discharging of the electrochemical apparatus, including but not limited to stopping a charge/discharge operation of the electrochemical apparatus and sending prompt information for stopping the charge/discharge operation of the electrochemical apparatus. With the cycling of the electrochemical apparatus, the internal resistance change rate of the electrochemical apparatus rises above the second threshold. At this time, it is determined that cycling of the electrochemical apparatus is abnormal and greater intervention is required. In other words, an operation related to the charge/discharge state of the electrochemical apparatus is performed, so as to increase the cycle life of the electrochemical apparatus and reduce the possibility of safety accidents.

With the control method of this application adopted, the high energy density feature of the electrochemical apparatus can be fully utilized in an early stage when the internal resistance change rate is small. In addition, during cycling, whether to raise the discharge cut-off voltage of the electrochemical apparatus by the first raising amount or perform an operation related to the charge/discharge state of the electrochemical apparatus can be determined based on the internal resistance change rate of the electrochemical apparatus. This can increase the cycle life of the electrochemical apparatus while guaranteeing high energy density of the electrochemical apparatus.

In some embodiments, a value range of the first voltage is 2.5 V to 3.5 V, and a value range of the second voltage is 4.2 V to 4.6 V. An excessively high first voltage hinders fully utilizing the energy density of the electrochemical apparatus, while an excessively low first voltage is likely to cause irreversible damage to the electrochemical apparatus. An excessively high second voltage is likely to cause irreversible damage to the electrochemical apparatus, while an excessively low second voltage hinders fully utilizing the energy density of the electrochemical apparatus.

In some embodiments, the first threshold satisfies 1% ≤ first threshold ≤ 10%. When 1% ≤ first threshold ≤ 10%, it indicates that the internal change rate of electrochemical apparatus is small at this time, cycling of the electrochemical apparatus is in a controllable range, and charge/discharge cycling can be performed in accordance with initial settings. If the first threshold is excessively small, the discharge cut-off voltage will be raised even when the electrochemical apparatus is in a good cycling state. This hinders fully utilizing the energy density of the electrochemical apparatus. If the first threshold is excessively large, the effect of increasing the cycle life of the electrochemical apparatus is relatively limited. In some embodiments, the first threshold may be 1%, 3%, 5%, 7%, 10%, or another appropriate value.

In some embodiments, the second threshold satisfies 10% < second threshold ≤ 20%.

When the internal resistance change rate of the electrochemical apparatus is between the first threshold and the second threshold, the discharge cut-off voltage of the electrochemical apparatus is raised by the first raising amount. In other words, the full charge and shallow discharge mode is used. This can increase the cycle life of the electrochemical apparatus. If the second threshold is excessively small, the operation related to the charge/discharge state of the electrochemical apparatus will be performed even when the electrochemical apparatus is in a good cycling state. If the second threshold is excessively large, the effect of increasing the cycle life and safety performance of the electrochemical apparatus is relatively limited. In some embodiments, the second threshold may be 11%, 13%, 15%, 17%, 20%, or another appropriate value.

In some embodiments, a value range of the first raising amount is 0.03 V to 0.6 V. If the first raising amount is excessively small, the operation of raising the discharge cut-off voltage may need to be performed frequently, or the effect of increasing the cycle life of the electrochemical apparatus is relatively limited. If the first raising amount is excessively large, the discharge cut-off voltage of the electrochemical apparatus is excessively high. This hinders fully utilizing the energy density of the electrochemical apparatus. In some embodiments, a value of the first raising amount may be 0.03 V, 0.1 V, 0.2 V, 0.3 V, 0.4 V, 0.5 V, 0.6 V, or another appropriate value. In some embodiments, when the internal resistance change rate of the electrochemical apparatus meets corresponding conditions, the discharge cut-off voltage can be raised by the first raising amount for many times until the discharge cut-off voltage of the electrochemical apparatus reaches 3.9 V or the internal resistance change rate of the electrochemical apparatus is greater than the second threshold.

In some embodiments, the performing an operation related to a charge/discharge state of the electrochemical apparatus includes at least one of steps (e) and (f): (e) stopping a charge/discharge operation of the electrochemical apparatus; and (f) sending prompt information for stopping the charge/discharge operation of the electrochemical apparatus. When the internal resistance change rate of the electrochemical apparatus is greater than the second threshold, cycling of the electrochemical apparatus may be unexpected. In this case, safety risks such as battery swelling can be avoided by stopping the charge/discharge operation of the electrochemical apparatus and/or sending prompt information for stopping the charge/discharge operation of the electrochemical apparatus, for example, reminding the user to replace the battery.

In some embodiments, the electrochemical apparatus includes a negative electrode plate, the negative electrode plate includes a negative electrode active material layer, and the negative electrode active material layer includes a silicon-based material. Using the silicon-based material can increase the energy density of the electrochemical apparatus. In some embodiments, the silicon-based material includes at least one of silicon, a silicon-oxygen material, a silicon-carbon material, or a silicon-oxygen-carbon material. In some embodiments, based on a mass of the negative electrode active material layer, a mass percentage of Si element in the negative electrode active material layer ranges from 1 % to 90%. In some embodiments, if the mass percentage of Si element in the negative electrode active material is excessively small, the effect of increasing the energy density of the electrochemical apparatus is relatively limited. If the mass percentage of Si element in the negative electrode active material layer is excessively large, the silicon-based material swells excessively during cycling, affecting the cycling performance of the electrochemical apparatus. In some embodiments, based on the mass of the negative electrode active material layer, the mass percentage of Si element in the negative electrode active material layer ranges from 5% to 50%. This can not only increase the energy density of the electrochemical apparatus but also minimize the adverse effects caused by swelling of silicon-based materials during cycling. Furthermore, based on the mass of the negative electrode active material layer, the mass percentage of Si element in the negative electrode active material layer ranges from 5% to 20%.

In this application, the mass percentage of Si element in the negative electrode active material layer in the negative electrode active material layer can be tested using an inductively coupled plasma optical emission spectrometer (ICP-OES). First, the negative electrode plate is pretreated. To be specific, the negative electrode plate is removed from a battery cell and baked for one hour in an oven at 400°C, so that the negative electrode material layer falls off from the current collector to obtain the negative electrode material. Then, 0.2 g of the negative electrode material is put into a 50 mL plastic volumetric flask and is dissolved by means of microwave digestion. The acid used for digestion is 10 mL of HNO₃ and 5 mL of HF. After being filtered, the resulting solution can be used for the ICP test, and the concentration (mg/L) of Si element can be obtained. The test method, in which an inductively coupled plasma optical emission spectrometer is used, is a technique known by persons skilled in the art and is not described further. It should be noted that the lithium-ion battery cell used in the test may be, for example, a formed lithium-ion battery, which is not limited herein.

In some embodiments, the electrochemical apparatus may include an electrode assembly, where the electrode assembly includes a positive electrode plate, a negative electrode plate, and a separator disposed between the positive electrode plate and the negative electrode plate.

In some embodiments, the negative electrode plate further includes a negative electrode current collector. In some embodiments, the negative electrode active material layer may be located on one side or two sides of the negative electrode current collector. In some embodiments, the negative electrode active material layer may further include a conductive agent and a binder. In some embodiments, the conductive agent in the negative electrode active material layer may include at least one of conductive carbon black, Ketjen black, laminated graphite, graphene, carbon nanotube, or carbon fiber. In some embodiments, the binder in the negative electrode active material layer may include at least one of carboxymethyl cellulose (CMC), polyacrylic acid, polyvinylpyrrolidone, polyaniline, polyimide, polyamideimide, silicone oil, styrene-butadiene rubber, phenolic epoxy resin, polyester resin, polyurethane resin, or polyfluorene. In some embodiments, a mass ratio of the negative electrode active material, the conductive agent, and the binder in the negative electrode active material layer may be (78-98.5):(0.1-10):(0.1-10). It should be understood that the foregoing description is only exemplary. Any other appropriate materials and mass ratios may be used. In some embodiments, the negative electrode current collector may be at least one of a copper foil current collector, a nickel foil current collector, or a carbon-based current collector.

In some embodiments, the positive electrode plate includes a positive electrode current collector and a positive electrode active material layer provided on the positive electrode current collector, where the positive electrode active material layer may include a positive electrode active material. In some embodiments, the positive electrode active material includes at least one of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate oxide, lithium nicotinate, lithium nickel cobalt manganate, lithium-rich manganese-based material, or lithium nickel cobalt aluminate. In some embodiments, the positive electrode active material layer may further include a conductive agent. In some embodiments, the conductive agent in the positive electrode active material layer may include at least one of conductive carbon black, Ketjen black, laminated graphite, graphene, carbon nanotubes, or carbon fiber. In some embodiments, the positive electrode active material layer may further include a binder, and the binder in the positive electrode active material layer may include at least one of carboxymethyl cellulose (CMC), polyacrylic acid, polyvinylpyrrolidone, polyaniline, polyimide, polyamideimide, silicone oil, styrene-butadiene rubber, phenolic epoxy resin, polyester resin, polyurethane resin, or polyfluorene. In some embodiments, in the positive electrode active material layer, a mass ratio of the positive electrode active material, the conductive agent, and the binder may be (80-99):(0.1-10):(0.1-10). In some embodiments, a thickness of the positive electrode active material layer may be 10 µm to 500 µm. It should be understood that the foregoing descriptions are merely examples, and any other suitable material, thickness, and mass ratio may be adopted for the positive electrode active material layer.

In some embodiments, the positive electrode current collector may be made of Al foil. Certainly, other current collectors commonly used in the art may also be used. In some embodiments, a thickness of the positive electrode current collector may range from 1 µm to 50 µm. In some embodiments, the positive electrode active material layer may be applied only on part of the positive electrode current collector.

In some embodiments, a separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, a thickness of the separator ranges from approximately 3 µm to 20 µm.

In some embodiments, a surface of the separator may further include a porous layer. The porous layer is disposed on at least one surface of the separator. The porous layer includes inorganic particles and the binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01 µm to 1 µm, The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments, the electrochemical apparatus includes a lithium-ion battery but this application is not limited thereto. In some embodiments, the electrochemical apparatus further includes an electrolyte, where the electrolyte includes at least one of fluoroether, fluoroethylene carbonate, or ether nitrile. In some embodiments, the electrolyte further includes a lithium salt. The lithium salt includes lithium bis(fluorosulfonyl)imide and lithium hexafluorophosphate. A concentration of the lithium salt ranges from 1 mol/L to 2 mol/L, and a mass ratio of the lithium bis(fluorosulfonyl)imide to the lithium hexafluorophosphate ranges from 0.06 to 5. In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, an electrode assembly of the electrochemical apparatus is a wound electrode assembly, a laminated electrode assembly, or a folded electrode assembly. In some embodiments, the positive electrode plate and/or the negative electrode plate of the electrochemical apparatus may be a multilayer structure formed in a winding or stacking manner, or may alternatively be a single-layer structure formed by stacking a single-layer positive electrode, a separator, and a single-layer negative electrode.

In some embodiments of this application, a lithium-ion battery is used as an example. A positive electrode plate, a separator, and a negative electrode plate are wound or stacked in sequence to form an electrode assembly, and the electrode assembly is then packaged in an aluminum-plastic film, followed by injection of an electrolyte, formation, and packaging, so that the lithium-ion battery is prepared. Then, a performance test is performed on the prepared lithium-ion battery.

Those skilled in the art understand that the method for preparing the electrochemical apparatus (for example, a lithium-ion battery) described above is only an embodiment. Without departing from the content disclosed in this application, other methods commonly used in the art may be used.

Some specific examples and comparative examples are listed below to better illustrate this application. Lithium-ion batteries are used as examples.

### Comparative Example 1

Preparation of positive electrode plate: A positive electrode active material lithium cobalt oxide, conductive carbon black (Super P), and polyvinylidene fluoride (PVDF) were mixed at a weight ratio of 97:1.4:1.6, N-methylpyrrolidone (NMP) was added as a solvent, and the mixture was well stirred. A slurry (with a solid content of 72 wt%) was uniformly applied on a positive electrode current collector aluminum foil till a thickness of 80 µm, dried at 85°C, followed by cold pressing, cutting, and slitting, and then dried in vacuum at 85°C for four hours to obtain the positive electrode plate.

Preparation of negative electrode plate: Artificial graphite, a binder polyacrylic acid, and sodium carboxymethyl cellulose (CMC) were dissolved in deionized water at a weight ratio of 97:1.5:1.5 to form a negative electrode slurry (with a solid content of 40 wt%). A 10 µm-thick copper foil was used as a negative electrode current collector. The negative electrode slurry was applied on the negative electrode current collector till a thickness of 50 µm, dried at 85°C, followed by cold pressing, cutting, and slitting, and then was dried in vacuum at 120°C for 12 hours to obtain the negative electrode plate.

Preparation of separator: 7 µm-thick polyethylene (PE) was used as the separator.

Preparation of electrolyte: In a dry argon atmosphere glove box, ethylene carbonate (EC), propylene carbonate (PC), diethyl carbonate (DEC) were mixed at a mass ratio of EC: PC: DEC=1: 1: 1, dissolved, and stirred properly, and then a lithium salt LiPF₆ was added. After uniform mixing, an electrolyte was obtained, in which a concentration of LiPF₆ was 1 mol/L.

Preparation of lithium-ion battery: The positive electrode plate, the separator, and the negative electrode plate were stacked in sequence, so that the separator was disposed between the positive electrode and the negative electrode for isolation, and then wound to obtain an electrode assembly. The electrode assembly was placed in an outer package aluminum-plastic film, and was dehydrated at 80°C. Then, the foregoing electrolyte was injected, and packaging was performed, followed by processes such as formation, degassing, and trimming to obtain the lithium-ion battery.

A single cycling condition remained unchanged, in which the first voltage was 3.0 V and the second voltage was 4.45 V.

Other examples and comparative examples are based on the steps in Comparative Example 1, except that the proportion of the silicon-based material and the charging/discharging method are changed. The changed parameters are described below.

The following describes methods for testing various parameters in this application.
1. Test of charge cut-off voltage and discharge cut-off voltage of the battery: A battery voltage internal resistance tester or multimeter can be used for testing.
2. Test of internal resistance change rate: A battery voltage internal resistance tester was used. The internal resistance of a fresh electrochemical apparatus is n, and the internal resistance of the electrochemical apparatus measured every 100 cycles is m. Then, the internal resistance change rate is (m-n)/n.
3. Test of battery cycles: A battery cycler (a commercially available Neware battery tester) is used for testing constant-current and constant-voltage charging/discharging of battery cells based on the preset charge/discharge cut-off voltages. For example, the charge cut-off voltage of a battery cell is 4.45 V and the discharge cut-off voltage is 3.0 V The cycler charges the battery cell to 4.45 V at a constant current of 3C at 25°C, and then discharges it to 3.0 V at 1C, which is recorded as one cycle. The test is repeated for different cycles of the battery cell. Cycle test until capacity degrades to 80%: A formed battery cell was charged at a constant current of 3C at 25°C, and then discharged at 1C. The capacity at this time was recorded as the initial capacity, and the number of cycles when the battery capacity degraded to 80% (or less than 80% of the initial capacity) of the initial capacity for the first time was recorded as the number of cycles until capacity degrades to 80%.
4. Energy density test: At 25°C, the prepared lithium-ion battery was fully charged at a 3C rate and fully discharged at a 1C rate, and then the discharge capacity was recorded. At 25°C, the lithium-ion battery was weighed by an electronic balance, and a ratio of the discharge capacity of the lithium-ion battery to the weight of the lithium-ion battery was recorded as the energy density of the lithium-ion battery.

It should be understood that the tests on the voltage, internal resistance, and cycle life of the lithium-ion batteries are known for those skilled in the art and are not described herein. In addition, the test methods are not limited to those described in this application, and other suitable test methods can also be adopted.

### Comparative Examples 1 to 6:

Based on the steps in Comparative Example 1, part of artificial graphite was replaced with a silicon-based material silicon monoxide (SiOx, 0 < x < 2), the mass percentage of Si element to the negative electrode active material layer was set to 1%, 5%, 25%, 50%, and 90% respectively, and the first voltage was set to 3.0 V and the second voltage was set to 4.45 V It can be learned from Table 1 that as the Si content increases, the energy density of the electrochemical apparatus increases but the cycle life obviously decreases.

**Table 1:**

| | Mass percentage of Si element to negative electrode active material layer | Percentage increase of energy density | Number of cycles until capacity degrades to 80% |
|---|---|---|---|
| Comparative Example 1 | 0% | Reference group | 950 |
| Comparative Example 2 | 1% | 0.5% | 930 |
| Comparative Example 3 | 5% | 3% | 880 |
| Comparative Example 4 | 25% | 12% | 750 |
| Comparative Example 5 | 50% | 20% | 520 |
| Comparative Example 6 | 90% | 23% | 300 |

### Comparative Examples 7 to 13:

Based on the steps in Comparative Example 1, part of artificial graphite was replaced with a silicon-based material SiC, the mass percentage of Si element to the negative electrode active material layer was 25%, and different first voltages were used and the second voltage remained at 4.45 V. In this example, the first voltage was set to 2.5 V, 2.8 V, 3.0 V, 3.2 V, 3.3 V, 3.4 V, and 3.5 V. It can be learned from Table 2 that the cycle life of the electrochemical apparatus obviously increases with the rise of the first voltage.

**Table 2:**

| | First voltage (V) | Percentage increase of energy density | Number of cycles until capacity degrades to 80% |
|---|---|---|---|
| Comparative Example 7 | 2.5 | 3% | 680 |
| Comparative Example 8 | 2.8 | 2.5% | 700 |
| Comparative Example 9 | 3.0 | Reference group | 750 |
| Comparative Example 10 | 3.2 | -3% | 880 |
| Comparative Example 11 | 3.3 | -6.5% | 950 |
| Comparative Example 12 | 3.4 | -10% | 1200 |
| Comparative Example 13 | 3.5 | -14% | 1500 |

### Comparative Examples 14 to 17:

Based on the steps in Comparative Example 1, part of artificial graphite was replaced with a silicon-based material Si, the mass percentage of Si element to the negative electrode active material layer was set to 25%, and the first voltages remained at 3.0 V and the second voltage was set to 4.2 V, 4.3 V, 4.45 V, and 4.6 V The cycle life of the electrochemical apparatus decreases with the rise of the second voltage, as shown in Table 3.

**Table 3:**

| | Second voltage (V) | Percentage increase of energy density | Number of cycles until capacity degrades to 80% |
|---|---|---|---|
| Comparative Example 14 | 4.2 | -4.5% | 1000 |
| Comparative Example 15 | 4.3 | -3% | 930 |
| Comparative Example 16 | 4.45 | Reference group | 750 |
| Comparative Example 17 | 4.6 | 3.5% | 580 |

### Examples 1 to 5:

Table 5 shows the number of cycles of the electrochemical apparatus when the discharge voltage starts to rise and the number of cycles when the capacity degrades to 80% in case that different first thresholds are set. The number of cycles when the discharge voltage starts to rise is the number of cycles when the discharge voltage is raised for the first time, that is, the number of cycles when the internal resistance change rate of the electrochemical apparatus is not smaller than the first threshold for the first time.

Based on the steps in Comparative Example 1, part of artificial graphite was replaced with a silicon-based material SiC, the mass percentage of Si element to the negative electrode active material layer was set to 25%, the first voltages was 3.0 V, the second voltage was 4.5 V, and the first threshold satisfies 1% ≤ first threshold ≤ 10%. When 1% ≤ first threshold ≤ 10%, it indicates that the internal change rate of electrochemical apparatus is small at this time, cycling of the electrochemical apparatus is in a controllable range, and charge/discharge cycling can be performed in accordance with initial settings. If the first threshold is small (for example, 1% in an example), the discharge cut-off voltage is raised (the value of the first raising amount in this example is 0.2 V) when the electrochemical apparatus undergoes 100 cycles. This hinders fully utilizing the energy density of the electrochemical apparatus. If the first threshold is large (for example, 10% in an example), the discharge cut-off voltage is not raised until the electrochemical apparatus undergoes 600 cycles (generally, the number of cycles is required to be 800-1000 when the capacity of a lithium-ion battery degrades to 80%; if the discharge cut-off voltage starts to rise upon 600 cycles, the effect of increasing the cycling performance is relatively limited). Therefore, the cycle life of the electrochemical apparatus is increased to a limited extent, as shown in Table 4.

**Table 4:**

| | First threshold | Number of cycles upon rise of discharge voltage of electrochemical apparatus | Number of cycles until capacity degrades to 80% |
|---|---|---|---|
| Example 1 | 0% | / | 750 |
| Example 2 | 1% | 100 | 830 |
| Example 3 | 3% | 200 | 920 |
| Example 4 | 5% | 300 | 950 |
| Example 5 | 10% | 600 | 780 |

### Examples 6 to 11:

Based on the steps in Comparative Example 1, part of artificial graphite was replaced with a silicon-based material SiC, the mass percentage of Si element to the negative electrode active material layer was set to 25%, the first voltages was 3.0 V, the second voltage was 4.5 V, the first threshold a was set to 5%, and the value of the first raising amount was 0.2 V. It can be learned from Example 4 that the first threshold is reached after 300 cycles, so that the discharge cut-off voltage is raised to 3.2 V. For further cycling, the second threshold is set, where the second threshold satisfies 10% < second threshold ≤ 20%. No second threshold is set in Example 6. The discharge cut-off voltage is raised by 0.2 V when the internal resistance change rate is greater than the first threshold of 5%, and an operation related to the charge/discharge state of the electrochemical apparatus is performed when the discharge cut-off voltage reaches 4.4 V. In Examples 7 to 11, when the discharge cut-off voltage reached 4.2 V, raising the discharge voltage was stopped. When the internal resistance change rate of the electrochemical apparatus is between the first threshold and the second threshold, the discharge cut-off voltage of the electrochemical apparatus is raised by the first raising amount. In other words, the full charge and shallow discharge mode is used. This can increase the cycle life of the electrochemical apparatus. If the second threshold is excessively small, the operation related to the charge/discharge state of the electrochemical apparatus will be performed even when the electrochemical apparatus is in a good cycling state. If the second threshold is excessively large, the effect of increasing the cycle life and safety performance of the electrochemical apparatus is relatively limited. In these embodiments, the second threshold may be 11%, 13%, 15%, 17%, or 20%, and the results are shown in Table 5.

**Table 5:**

| | First threshold | Number of cycles upon rise of discharge voltage of electrochemical apparatus | Second threshold | Number of cycles at the end of raising discharge voltage of electrochemical apparatus | Number of cycles when operation related to charge/discharge state of electrochemical apparatus |
|---|---|---|---|---|---|
| Example 6 | 5% | 300 | / | / | 1280 |
| Example 7 | 5% | 300 | 11% | 700 | 1600 |
| Example 8 | 5% | 300 | 13% | 800 | 1680 |
| Example 9 | 5% | 300 | 15% | 900 | 1620 |
| Example 10 | 5% | 300 | 17% | 1000 | 1400 |
| Example 11 | 5% | 300 | 20% | 1000 | 1350 |

In addition, an embodiment of this application further provides a charging apparatus, and the charging apparatus includes a processor and a computer-readable storage medium. The computer-readable storage medium stores computer-executable instructions configured to be being executed by the processor, and when the computer-executable instructions are executed by the processor, steps of the control method according to any one of the foregoing embodiments are implemented. In some embodiments, the processor and the computer-readable storage medium may be installed on a same carrier (for example, a circuit board) or distributed on different carriers. For example, the processor may be granted access to computer-executable instructions in the remote computer-readable storage medium in various communication modes (wired or wireless). A computer-readable storage medium and the processor may be provided on one or more of an electrochemical apparatus, an electronic apparatus connected to the electrochemical apparatus, or a charging apparatus connected to the electrochemical apparatus. In some embodiments, the computer-readable storage medium and the processor may be provided on a same apparatus (for example, an electrochemical apparatus, or an electronic apparatus, or a charging apparatus). In some embodiments, the computer-readable storage medium and the processor may be provided on two different apparatuses. For example, the computer-readable storage medium may be provided on an electrochemical apparatus, while the processor may be provided on a charging apparatus.

An embodiment of this application further provides an electrochemical apparatus, and the electrochemical apparatus includes a processor and a computer-readable storage medium. An initial discharge cut-off voltage of the electrochemical apparatus is a first voltage and an initial charge cut-off voltage is a second voltage. The computer-readable storage medium stores computer-executable instructions configured to be being executed by the processor, and when the computer-executable instructions are executed by the processor, steps of the control method according to any one of the foregoing embodiments are implemented.

In some embodiments, the processor is configured to: when the internal resistance change rate of the electrochemical apparatus is smaller than the first threshold, control the electrochemical apparatus to charge and discharge at the first voltage and the second voltage; when the internal resistance change rate of the electrochemical apparatus is greater than or equal to the first threshold and smaller than or equal to the second threshold, raise the discharge cut-off voltage of the electrochemical apparatus by a first raising amount, where the second threshold is greater than the first threshold; and when the internal resistance change rate of the electrochemical apparatus is greater than the second threshold, perform an operation related to a charge/discharge state of the electrochemical apparatus.

In some embodiments, the electrochemical apparatus includes a negative electrode plate, the negative electrode plate includes a negative electrode active material layer, and the negative electrode active material layer includes a silicon-based material. In some embodiments, the silicon-based material includes at least one of silicon, a silicon-oxygen material, a silicon-carbon material, or a silicon-oxygen-carbon material. In some embodiments, based on a mass of the negative electrode active material layer, a mass percentage of Si element in the negative electrode active material layer ranges from 1% to 90%.

In some embodiments, the first voltage is 2.5 V to 3.5 V and the second voltage is 4.2 V to 4.6 V. In some embodiments, the first threshold satisfies 1% ≤ first threshold ≤ 10%. In some embodiments, the second threshold satisfies 10% < second threshold ≤ 20%. In some embodiments, a value range of the first raising amount is 0.03 V to 0.6 V. In some embodiments, the performing an operation related to a charge/discharge state of the electrochemical apparatus includes at least one of steps (d) and (e): (d) stopping a charge/discharge operation of the electrochemical apparatus; and (e) sending prompt information for stopping the charge/discharge operation of the electrochemical apparatus.

With the electrochemical apparatus of this application adopted, the high energy density feature of the electrochemical apparatus can be fully utilized in an early stage when the internal resistance change rate is small. In addition, during cycling, whether to raise the discharge cut-off voltage of the electrochemical apparatus by the first raising amount or perform an operation related to the charge/discharge state of the electrochemical apparatus can be determined based on the internal resistance change rate of the electrochemical apparatus. This can increase the cycle life of the electrochemical apparatus while guaranteeing high energy density of the electrochemical apparatus.

An embodiment of this application further provides a charging apparatus. As shown in FIG. 2, the charging apparatus 500 includes a processor 501 and a machine-readable storage medium 502. The charging apparatus 500 may further include a detection circuit module 503, a charge/discharge circuit 504, an interface 505, a power interface 506, and a rectifier circuit 507. The detection circuit module 503 is configured to detect the internal resistance change rate of a lithium-ion battery and send the detection result to the processor 501. The charge/discharge circuit 504 is configured to receive instructions from the processor 501 for charging or discharging a lithium-ion battery 605. The interface 505 is configured for electrical connection with the lithium-ion battery 605. The power interface 506 is configured for connection with an external power source. The rectifier circuit 507 is configured for rectifying the input current. The machine-readable storage medium 502 stores machine-executable instructions configured to be being executed by the processor. When the machine-executable instructions are executed by the processor 501, steps of the method according to any one of the foregoing embodiments are implemented.

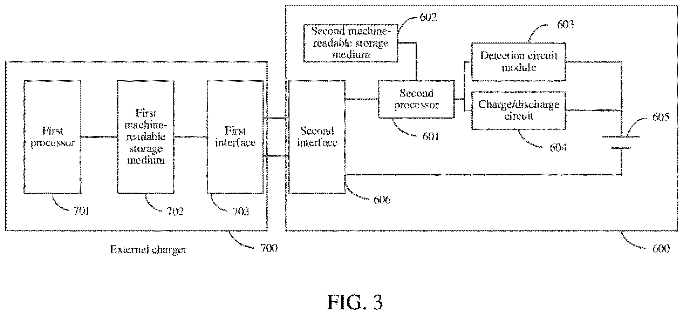

An embodiment of this application further provides a system. As shown in FIG. 3, the system 600 includes a second processor 601 and a second machine-readable storage medium 602. The system 600 may further include a detection circuit module 603, a charge/discharge circuit 604, a lithium-ion battery 605, and a second interface 606. The detection circuit module 603 is configured to detect the internal resistance change rate of the lithium-ion battery 605 and send the detection result to the second processor 601. The charge/discharge circuit 604 is configured to receive instructions from the second processor 601 for charging or discharging the lithium-ion battery 605. The second interface 606 is configured for electrical connection with an interface of an external charger 700. The external charger 700 is configured to supply power. The second machine-readable storage medium 602 stores machine-executable instructions configured to be being executed by the processor. When the machine-executable instructions are executed by the second processor 601, steps of the method according to any one of the foregoing embodiments are implemented. The external charger 700 may include a first processor 701, a first machine-readable storage medium 702, a first interface 703, and a corresponding rectifier circuit. The external charger may be a commercially available charger, and its structure is not specifically limited in this embodiment of this application. An embodiment of this application further provides a computer-readable storage medium. The computer-readable storage medium stores a computer program, and when the computer program is configured to be executed by a processor, steps of the control method according to any one of the foregoing embodiments are implemented. The computer-readable storage medium may include a random access memory (Random Access Memory, RAM), or may include a non-volatile memory (non-volatile memory), for example, at least one disk memory. Alternatively, the memory may also be at least one storage device located far away from the foregoing processor. The foregoing processor may be a general-purpose processor, including a central processing unit (Central Processing Unit, CPU), a network processor (Network Processor, NP), and the like; or may be a digital signal processing (Digital Signal Processing, DSP), an application specific integrated circuit (Application Specific Integrated Circuit, ASIC), a field-programmable gate array (Field-Programmable Gate Array, FPGA) or another programmable logic device, a discrete gate or transistor logic device, or a discrete hardware component. It should be understood that the processor may be included in an electrochemical apparatus, in a charging apparatus, or an electronic apparatus (for example, a mobile phone) containing an electrochemical apparatus.

An embodiment of this application further provides an electronic apparatus including the foregoing electrochemical apparatus. The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, a lithium-ion capacitor, and the like. For example, the electronic apparatus may be an apparatus having a built-in lithium-ion battery and data processing capability such as a mobile phone and a tablet computer.

Embodiments of the charging apparatus/electrochemical apparatus/computer-readable storage medium/electronic apparatus are basically similar to the method embodiment and therefore are described briefly herein. Refer to part of description of this method embodiment for relevant issues.
The foregoing descriptions are only preferred embodiments of this application and explanations of the applied technical principles. Those skilled in the art should understand that the scope disclosed in this application is not limited to the technical solutions formed by the specific combination of the above technical features, and should also cover other technical solutions formed by any combination of the above technical features or their equivalent features, for example, a technical solution formed by replacement between the above features and technical features having similar functions disclosed in this application

## Claims

1. A method for controlling an electrochemical apparatus, wherein an initial discharge cut-off voltage of the electrochemical apparatus is a first voltage, an initial charge cut-off voltage is a second voltage, and the control method comprises steps (a) and (b):
(a) when an internal resistance change rate of the electrochemical apparatus is smaller than a first threshold, performing charging/discharging at the first voltage and the second voltage; and
(b) when the internal resistance change rate of the electrochemical apparatus is greater than or equal to the first threshold, raising the discharge cut-off voltage of the electrochemical apparatus by a first raising amount.

2. The method according to claim 1, wherein the when the internal resistance change rate of the electrochemical apparatus is greater than or equal to the first threshold, raising the discharge cut-off voltage of the electrochemical apparatus by a first raising amount comprises:
(c) when the internal resistance change rate of the electrochemical apparatus is greater than or equal to the first threshold and smaller than or equal to a second threshold, raising the discharge cut-off voltage of the electrochemical apparatus by the first raising amount, wherein the second threshold is greater than the first threshold; and
(d) when the internal resistance change rate of the electrochemical apparatus is greater than the second threshold and/or when the discharge cut-off voltage of the electrochemical apparatus is raised to a threshold of the first voltage, performing an operation related to a charge/discharge state of the electrochemical apparatus.

3. The method according to claim 1, wherein the electrochemical apparatus comprises a negative electrode plate, the negative electrode plate comprises a negative electrode active material layer, and the negative electrode active material layer comprises a silicon-based material.

4. The method according to claim 3, wherein based on a mass of the negative electrode active material layer, a mass percentage of Si element in the negative electrode active material layer ranges from1% to 90%.

5. The method according to claim 1, wherein a value range of the first voltage is 2.5 V to 3.5 V, and a value range of the second voltage is 4.2 V to 4.6 V.

6. The method according to claim 1, wherein the first threshold satisfies 1% ≤ first threshold ≤ 10%.

7. The method according to claim 2, wherein the second threshold satisfies 10% < second threshold ≤ 20%.

8. The method according to claim 1, wherein a value range of the first raising amount is 0.03 V to 0.6 V.

9. The method according to claim 2, wherein the performing an operation related to a charge/discharge state of the electrochemical apparatus comprises at least one of steps (e) and (f):
(e) stopping a charge/discharge operation of the electrochemical apparatus; and
(f) sending prompt information for stopping the charge/discharge operation of the electrochemical apparatus.

10. A computer-readable storage medium, wherein the computer-readable storage medium stores a computer program, and when the computer program is configured to be executed by a processor, the control method according to any one of claims 1 to 9 is implemented.

11. A charging apparatus comprising a processor and a computer-readable storage medium, wherein the computer-readable storage medium stores computer-executable instructions configured to be being executed by the processor, and when the computer-executable instructions are executed by the processor, the control method according to any one of claims 1 to 9 is implemented.

12. An electrochemical apparatus comprising a processor and a computer-readable storage medium, wherein an initial discharge cut-off voltage of the electrochemical apparatus is a first voltage, an initial charge cut-off voltage is a second voltage, the computer-readable storage medium stores computer-executable instructions configured to be being executed by the processor, and when the computer-executable instructions are executed by the processor, a control method is implemented, wherein the control method comprises steps (a) and (b):
(a) when an internal resistance change rate of the electrochemical apparatus is smaller than a first threshold, performing charging/discharging at the first voltage and the second voltage; and
(b) when the internal resistance change rate of the electrochemical apparatus is greater than or equal to the first threshold, raising the discharge cut-off voltage of the electrochemical apparatus by a first raising amount.

13. The electrochemical apparatus according to claim 12, wherein the when the internal resistance change rate of the electrochemical apparatus is greater than or equal to the first threshold, raising the discharge cut-off voltage of the electrochemical apparatus by a first raising amount comprises:
(c) when the internal resistance change rate of the electrochemical apparatus is greater than or equal to the first threshold and smaller than or equal to a second threshold, raising the discharge cut-off voltage of the electrochemical apparatus by the first raising amount, wherein the second threshold is greater than the first threshold; and
(d) when the internal resistance change rate of the electrochemical apparatus is greater than the second threshold and/or when the discharge cut-off voltage of the electrochemical apparatus is raised to a threshold of the first voltage, performing an operation related to a charge/discharge state of the electrochemical apparatus.

14. The electrochemical apparatus according to claim 12, wherein the electrochemical apparatus comprises a negative electrode plate, the negative electrode plate comprises a negative electrode active material layer, and the negative electrode active material layer comprises a silicon-based material.

15. The electrochemical apparatus according to claim 14, based on the mass of the negative electrode active material layer wherein the mass percentage of Si element in the negative electrode active material layer ranges from 1% to 90%.

16. The electrochemical apparatus according to claim 12, wherein a value range of the first voltage is 2.5 V to 3.5 V, and a value range of the second voltage is 4.2 V to 4.6 V

17. The electrochemical apparatus according to claim 13, wherein the first threshold satisfies 1% ≤ first threshold ≤ 10%, and the second threshold satisfies 10% < second threshold ≤ 20%.

18. The electrochemical apparatus according to claim 12, wherein a value range of the first raising amount is 0.03 V to 0.6 V.

19. The electrochemical apparatus according to claim 13, wherein the performing an operation related to a charge/discharge state of the electrochemical apparatus comprises at least one of steps (e) and (f):
(e) stopping a charge/discharge operation of the electrochemical apparatus; and
(f) sending prompt information for stopping the charge/discharge operation of the electrochemical apparatus.

20. An electronic apparatus, comprising the electrochemical apparatus according to any one of claims 12 to 19.
